# FASCICULE DE BREVET EUROPEEN

(11) **EP 4 351 892 B1**
(45) Date de publication et mention de la délivrance du brevet: **02.07.2025**
(21) Numéro de dépôt: 22731749.2
(22) Date de dépôt: 23.05.2022
(51) Int. Cl.: B60C 15/06, B60C 1/00, B60C 13/00, B60C 13/04

(54) **PNEUMATIQUE AVEC DES PERFORMANCES OPTIMISÉES EN RÉSISTANCE AU ROULEMENT SANS DÉGRADER LA PERFORMANCE INDUSTRIELLE**
REIFEN MIT OPTIMIERTER ROLLWIDERSTANDSLEISTUNG OHNE DIE INDUSTRIELLE FERTIGUNG ZU BEEINTRÄCHTIGEN
TYRE HAVING OPTIMIZED PERFORMANCE IN TERMS OF ROLLING RESISTANCE WITHOUT IMPAIRING THE INDUSTRIAL PERFORMANCE

(30) Priorité: 07.06.2021 FR 2105984
(43) Date de publication de la demande: 17.04.2024
(73) Titulaire: COMPAGNIE GENERALE DES ETABLISSEMENTS MICHELIN, 63000 Clermont-Ferrand (FR)
(72) Inventeur: GANDER, Sophie, 63040 CLERMONT-FERRAND Cedex 9 (FR); ROTY, Gael, 63040 CLERMONT-FERRAND Cedex 9 (FR); FERIGO, Hervé, 63040 CLERMONT-FERRAND Cedex 9 (FR)
(74) Mandataire: M.F.P. Michelin
(86) Numéro de dépôt international: PCT/FR2022/050973
(87) Numéro de publication internationale: WO 2022/258902

(56) Documents cités:
- EP-A1- 1 640 188
- DE-T5- 112016 000 956
- JP-A- 2006 062 379

## Description

### Domaine de l'invention

La présente invention concerne un pneumatique pour véhicule automobile dont les performances en résistance au roulement sont améliorées sans dégrader la performance industrielle de sa fabrication. L'invention est plus particulièrement adaptée pour un pneumatique radial destiné à équiper un véhicule de tourisme ou une camionnette.

### Définitions

Par convention, on considère un repère (O, OX, OY, OZ), dont le centre O coïncide avec le centre du pneumatique, les directions circonférentielles OX, axiale OY, et radiale OZ désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

La constitution du pneumatique est usuellement décrite par une représentation de ses constituants dans un plan méridien, c'est-à-dire un plan contenant l'axe de rotation du pneumatique.

Un pneumatique comprend un sommet, destiné à venir en contact avec un sol par l'intermédiaire d'une bande de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de sommet d'un pneumatique radial comprend une superposition de couches de sommet s'étendant circonférentiellement, radialement à l'extérieur de l'armature de carcasse. Chaque couche de sommet est constituée de renforts parallèles entre eux et enrobés par un matériau polymérique de type élastomère ou mélange élastomérique. L'ensemble constitué par l'armature de sommet et la bande de roulement est appelé sommet.

L'armature de carcasse d'un pneumatique radial comprend habituellement au moins une couche de carcasse constituée d'éléments de renforcement métalliques ou textiles enrobés dans un mélange élastomérique d'enrobage. Les éléments de renforcement sont sensiblement parallèles entre eux et font, avec la direction circonférentielle, un angle compris entre 85° et 95°. La couche de carcasse comprend une partie principale, reliant les deux bourrelets entre eux et s'enroulant, dans chaque bourrelet, autour d'une structure annulaire de renforcement. La structure annulaire de renforcement peut être une tringle qui comprend un élément de renforcement circonférentiel le plus souvent métallique entouré d'au moins un matériau, de manière non exhaustive, élastomérique ou textile. L'enroulement de la couche de carcasse autour de la structure annulaire va de l'intérieur vers l'extérieur du pneumatique pour former un retournement, comprenant une extrémité. Le retournement, dans chaque bourrelet, permet l'ancrage de la couche d'armature de carcasse à la structure annulaire du bourrelet.

Chaque bourrelet comprend une couche de bourrage prolongeant radialement vers l'extérieur la structure annulaire de renforcement. La couche de bourrage est constituée d'au moins un mélange élastomérique de bourrage. La couche de bourrage sépare axialement la partie principale et le retournement de l'armature de carcasse.

Chaque bourrelet comprend également une couche de protection prolongeant radialement vers l'intérieur le flanc et axialement extérieur au retournement. La couche de protection est également au moins en partie en contact par sa face axialement extérieure avec un crochet de la jante. La couche de protection est constituée d'au moins un mélange élastomérique de protection.

Chaque bourrelet peut comprendre enfin une couche latérale de renforcement positionnée entre le flanc et le retournement de l'armature de carcasse. La couche latérale de renforcement extérieure est constituée d'au moins un mélange élastomérique.

Chaque flanc de pneumatique comprend au moins une couche de flanc constituée par un mélange élastomérique et s'étendant axialement vers l'intérieur du pneumatique à partir d'une face extérieure du pneumatique, en contact avec l'air atmosphérique.

Par mélange élastomérique, on entend un matériau élastomérique obtenu par mélangeage de ses divers constituants. Un mélange élastomérique comprend classiquement une matrice élastomérique avec au moins un élastomère diénique de type caoutchouc naturel ou synthétique, au moins une charge renforçante de type noir de carbone et/ou de type silice, un système de réticulation le plus souvent à base de soufre, et des agents de protection. Pour certaines applications, les élastomères considérés peuvent également comprendre des thermoplastiques (TPE).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère présent dans la composition de mélange considérée.

Un mélange élastomérique peut être caractérisé mécaniquement, en particulier après cuisson, par ses propriétés dynamiques, telles qu'un module de cisaillement dynamique G*= (G'2+G''2)1/2, où G' est le module élastique de rigidité de cisaillement et G'' le module de cisaillement visqueux, et une perte dynamique Tanδ=G''/G'. Le module de cisaillement dynamique G* et la perte dynamique Tanδ sont mesurés sur un viscoanalyseur de type Metravib VA4000, selon la norme ASTM D 5992-96. On enregistre la réponse d'un échantillon de mélange élastomérique vulcanisé ayant la forme d'une éprouvette cylindrique de 2 mm d'épaisseur et de 78 mm² de section, soumis à une sollicitation sinusoïdale en cisaillement simple alterné, à la fréquence de 10Hz, à une température de 100°C. On effectue avec un balayage en amplitude de déformation de 0,1% à 50% (cycle aller), puis de 50% à 0,1% (cycle retour). Pour le cycle aller, on indique la valeur maximale de tan(δ) observée, noté Tan(δ)ₘₐₓ.

La performance "comportement" correspond aux réponses d'un ensemble véhicule/pneu à des sollicitations multiples du conducteur (braquage, accélération, freinage...). Le comportement est à la fois essentiel en termes de sécurité pour la stabilité du véhicule mais également pour l'agrément de conduite.

Le pneu joue un rôle clé dans le comportement routier car il assure, en bout de chaîne, la transmission des efforts entre le véhicule et le sol afin de maintenir la trajectoire définie par le conducteur.

En virage, pour que le véhicule reste sur une trajectoire, il faut générer une force équivalente (mais de sens opposé) à la force centrifuge qui tend à éjecter le véhicule de la trajectoire. Cette force latérale doit être générée par les 4 pneus du véhicule pour vaincre la force centrifuge.

La déformation des pains de gomme en contact avec le sol génère un effort latéral. Le mécanisme qui permet au pneu de déformer les pains de gomme en virage est la mise en dérive. La dérive est l'angle entre la direction de la roue et la trajectoire suivie par le véhicule. En virage, cet angle n'est pas nul afin de permettre au pneumatique de déformer les pains de gomme de la bande de roulement et ainsi de générer les efforts latéraux nécessaires.

On appelle rigidité de dérive transversale la variation des efforts transversaux générés dans l'aire de contact du pneumatique en mouvement écrasé par la charge portée, en fonction de l'angle de dérive appliqué au pneumatique. La rigidité de dérive transversale s'exprime en Newton par degré (N/°).

Pour de faibles angles de dérive, c'est-à-dire des angles inférieurs à 10°, l'effort transversal, de direction parallèle à l'axe de rotation du pneumatique est proportionnel à l'angle de dérive. La rigidité de dérive transversale est égale à ce coefficient de proportionnalité.

La rigidité de dérive transversale est une grandeur physique essentielle qui relie le pneumatique au véhicule et détermine la qualité du comportement du véhicule sur route.

La résistance au roulement est une autre performance traitée dans la demande. La résistance au roulement est l'une des forces qui s'opposent à l'avancement du véhicule. Le coefficient de Résistance au Roulement d'un pneumatique (C_{RR}), c'est la force de résistance au roulement ramenée à la charge portée par le pneumatique. Le coefficient est exprimé en kg/t.

La résistance au roulement est liée essentiellement à la déformation du pneumatique. A titre d'illustration, les bourrelets associés aux flancs représentent de 20% à 30% de la résistance au roulement du pneumatique, alors que la bande de roulement contribue à hauteur de 60% à 80%.

Le plus souvent dans cette présente demande de brevet, le pneumatique apparaît monté sur une jante. Ladite jante est choisie selon les spécifications de la norme l'ETRTO (Organisation Européenne Technique des Pneumatiques et des jantes) qui, à une dimension pneumatique donnée, associe des jantes recommandées. En générale, plusieurs largeurs jantes peuvent convenir à une même dimension pneumatique. La partie de la jante qui interagit avec le pneumatique dans le cadre de l'invention est axisymétrique par rapport à l'axe de rotation du pneumatique. Pour décrire la jante, il suffit de décrire le profil générateur dans un plan méridien.

Dans un plan méridien, la jante comprend au moins un crochet situé à une extrémité axiale, et relié à un siège qui est destiné à recevoir une face du bourrelet située le plus radialement intérieurement. Entre le siège et le crochet, prend place une portion rectiligne qui relie le crochet de jante au siège par des congés de raccords. Le crochet de la jante prolongée par la portion rectiligne limite axialement le déplacement des bourrelets lors du gonflage.

La montabilité des bourrelets sur une jante lors du gonflage est aussi une performance qui peut être impactée par l'invention. La performance montabilité des bourrelets consiste à évaluer l'aptitude des bourrelets d'un pneumatique à s'installer correctement sur une jante lors de du gonflage. Sur la face radialement la plus intérieure du bourrelet, le contact avec le siège doit être suffisant pour éviter toute fuite de l'air de gonflage du pneumatique. En général, une pression de contact d'au moins 1.4 MPa est attendue dans cette zone de contact. La pression de gonflage vient coincer le bourrelet contre le crochet de la j ante. Là encore la pression de contact sur le crochet doit être suffisante pour éviter le déjantage du pneumatique notamment dans les virages sévères à vitesse élevée. Des moyens d'observation, notamment radiographiques, des bourrelets montés sur une jante permettent de diagnostiquer la qualité du montage.

Il est donc possible de classer deux pneumatiques par rapport à leur performance de montabilité sur jante.

### Technique antérieure

La réduction des émissions de gaz à effet de serre des transports est un des défis majeurs devant lequel se trouvent les constructeurs de véhicules aujourd'hui. Le pneumatique constitue une source importante de progrès, par le biais d'un abaissement de la résistance au roulement, car celle-ci a un impact direct sur la consommation de carburant du véhicule. A titre d'illustration, une baisse de 20% de la résistance au roulement d'un pneumatique permet d'économiser environ 3% de carburant aux 100 km en cycle mixte.

Il existe encore un besoin de réduire la résistance au roulement des pneumatiques tourisme sans dégrader pour autant les autres performances et y compris les performances industrielles.

Il a déjà été proposé d'améliorer la résistance au roulement des pneumatiques pour véhicules de tourisme en optimisant leurs bourrelets. Le document WO 2010/072736 enseigne notamment d'utiliser des compositions élastomériques ayant de faibles modules élastiques de rigidité de cisaillement G' autour 15MPa et des modules visqueux G" inférieurs de plus de 20% aux modules élastiques de rigidité de cisaillement pour obtenir une baisse notable de la résistance au roulement.

Ce document préconise également de réduire encore davantage la résistance au roulement en optimisant la géométrie des couches de mélange élastomérique dont les modules élastique et visqueux vérifient la relation précédente. Cette optimisation conduit à des profils de couches de mélanges élastomériques plus court et plus large que dans des pneumatiques traditionnels. Dans certains cas, la difficulté de mise en œuvre industrielle pour fabriquer ces profils de couches de mélanges est un inconvénient majeur de cette approche.

Le document FR2994127 décrit un perfectionnement du document WO 2010/072736, en proposant d'ajouter une armature de renforcement dans les bourrelets. L'armature de renforcement est formée de renforts enrobés dans un mélange élastomérique.

L'inconvénient majeure de cette solution est une dégradation significative du coût de revient industriel avec l'introduction de nouveaux semi-finis dans le processus de fabrication du pneumatique.

D'autres documents tel que le brevet EP2657049B1 suggère de baisser l'hystérèse de la couche de flanc pour gagner en résistance au roulement en dotant la couche de flanc d'une composition chimique appropriée.

La couche de flanc assure plusieurs fonctions du pneumatique. Paroi extérieure du pneumatique en contact avec l'air ambiant, la couche de flanc doit résister aux attaques de l'ozone qui y est contenu. En conduite urbaine, la couche de flanc doit résister aux contacts avec les trottoirs qui se traduisent quelquefois par du râpage de la surface externe du flanc conduisant à une usure prématurée.

La baisse de la résistance au roulement par la baisse de l'hystérèse du mélange élastomérique de la couche flanc suppose une composition chimique significativement différente des compositions habituelles de ce poste. Souvent, la recherche du compromis de performances entre la résistance au roulement et les autres performances de la couche de flanc conduisent à des mélanges élastomériques dont l'utilisation en fabrication industrielle dégrade la performance industrielle.

On entend par performance industrielle l'aptitude des procédés à produire un volume donné de produits tout en respectant des exigences de qualité, de coûts et de délais. Ici les coûts sont en lien avec la perte matière dus aux rebuts de défauts de qualité. L'invention étant à iso procédés, seul le coût matière est considéré dans la performance industrielle.

Une des étapes de la fabrication d'un pneumatique consiste en une phase de moulage dans un moule de cuisson. L'ébauche du pneumatique après l'assemblage de ses constituants est placée dans un moule chaud fermé, et une membrane positionnée à l'intérieur du moule et remplie d'un fluide chaud se déploie pour plaquer ledit pneumatique contre les parois intérieures du moule de manière à imprimer le dessin de la sculpture sur la bande de roulement et les marquages sur les flancs.

Parmi les marquages, on distingue les marquages indiquant des informations techniques sur l'utilisation du produit, des informations commerciales et des informations réglementaires. Les informations réglementaires sont obligatoires et doivent répondre à des exigences précises en ce qui concerne la police, et la taille des caractères.

Les pneumatiques qui présentent des défauts de marquages réglementaires sont rebutés, s'ils ne sont pas réparables ce qui augmente la perte matière et dégrade la performance industrielle.

On connait les pneumatiques de l'état de la technique des documents JP2006062379A, EP1640188A1 et DE112016000956T5.

Les inventeurs se sont donnés pour objectif de réaliser un pneumatique qui améliore le niveau de résistance au roulement sans dégrader la performance industrielle.

### Exposé de l'invention

Ce but a été atteint par un pneumatique pour véhicule de tourisme comprenant dans un plan méridien :
deux bourrelets destinés à être montés sur une jante, deux couches de flancs reliés aux bourrelets, un sommet comportant une bande de roulement, le sommet ayant un premier côté relié à l'extrémité radialement extérieure de l'un des deux couches de flancs et ayant un deuxième côté relié à l'extrémité radialement extérieure de l'autre des deux couches de flancs ;
au moins une armature de carcasse s'étendant depuis les deux bourrelets jusqu'au sommet, l'armature de carcasse comportant une pluralité d'éléments de renforcement de carcasse et étant ancrée dans les deux bourrelets par un retournement autour d'une structure annulaire de renforcement, de manière à former dans chaque bourrelet une partie principale et un retournement ;
chaque couche de flanc étant constituée de deux sous-couches axialement superposées, une première sous-couche de flanc FE1 délimitée par un premier côté axialement le plus extérieur constituant une paroi latérale du pneumatique en contact avec l'air ambiant, et un deuxième côté axialement intérieur défini de manière à ce que ladite sous-couche de flanc FE1 ait une épaisseur axiale moyenne E1, et occupant un volume V1 ;
chaque couche de flanc comprenant également une deuxième sous-couche de flanc FE2 dont un premier côté coïncide avec le deuxième côté de la première sous-couche de flanc FE1, et dont un deuxième côté, axialement intérieur, étant au moins en partie en contact avec l'armature de carcasse, ladite sous-couche de flanc FE2 ayant une épaisseur moyenne E2, et occupant un volume V2 ;
l'épaisseur E1 de la première sous-couche de flanc FE1 est supérieure ou égale à 0.7 mm ;
le rapport V1/(V1+V2) est inférieur ou égal à 0.3 ;
l'allongement à rupture du mélange élastomérique constituant la première sous-couche de flanc FE1 est supérieur ou égal à 200% mesuré à une température de 100°C;
la perte dynamique de la deuxième sous couche de flanc FE2, Tan (δ) max est inférieure ou égale à 0.10.

Le principe de l'invention est de baisser l'hystérèse de la couche de flanc pour baisser la résistance au roulement du pneumatique sans dégrader les autres performances notamment la performance industrielle. Pour cela, les fonctions du flanc sont découplées, en considérant la couche de flanc comme étant un stratifié doté de deux sous-couches superposées dans la direction axiale.

L'épaisseur moyenne E2 de la sous couche FE2 est la moyenne des épaisseurs mesurées selon une droite normale à l'armature de carcasse entre un premier et un deuxième points aux intersections de ladite droite normale et de chacun des premier et deuxième côtés de ladite sous-couche FE2. On définit de façon équivalente l'épaisseur moyenne E1 de la sous couche FE1.

La deuxième sous-couche FE2 occupe le plus grand volume de mélange élastomérique parmi les deux sous-couches. Selon l'invention, le volume V1 de la sous couche FE1 est inférieur ou égal à 30 % du volume total du flanc. A titre d'illustration, sur une dimension pneumatique tourisme, 245/45 R18, à une ordonnée correspondant au milieu de la couche de flanc dans le repère méridien, E2 vaut 1.2 mm et E1 vaut 0.7 mm.

La perte dynamique du mélange de la sous-couche de flanc FE2, Tan (δ) max est inférieure ou égale à 0.10. Cette condition en hystérèse, imposée à la deuxième sous-couche est motivée pour un gain en résistance au roulement.

La première sous-couche FE1 est destinée à être en contact avec le moule de cuisson du pneumatique pendant la phase de moulage. Les inventeurs ont établi une relation entre l'aptitude de la première sous-couche FE1 à être démoulée sans défauts de moulage, et la valeur de l'allongement à rupture à chaud da ladite sous-couche. Selon l'invention, l'allongement à rupture du mélange élastomérique constituant la première sous couche de flanc FE1 est supérieur ou égal 200% mesuré sous une température de 100°C.

Une épaisseur E1 de la première sous-couche de flanc définie par une valeur en millimètres autour de 0.7 mm garantit un fonctionnement correct sans une usure prématurée des flancs du pneumatique.

La combinaison du choix d'une couche de flanc en deux sous-couches FE1, FE2, avec une première sous-couche significativement plus faible d'épaisseur dotée de propriétés mécaniques à la rupture appropriées, et une deuxième sous-couche de flanc de basse hystérèse, conduit au pneumatique de l'invention qui apporte une amélioration de la résistance au roulement sans dégrader pour autant la performance industrielle.

L'invention apporte d'autres avantages : la première sous-couche FE1 qui est en contact avec l'environnement ambiant est conçue pour assurer également les fonctions de protection mécanique et chimique contre les agressions de l'environnement ambiant.

On entend par agression chimique des flancs, les effets de leur exposition prolongée à la lumière du soleil, en particulier la composante UV (ultra-violet) du spectre lumineux. La lumière UV a un effet sur la scission de la chaîne polymère principale, conduisant à une dégradation rapide de l'élastomère. Cette dégradation se manifeste sous la forme de fissures en surface souvent appelées craquelures et peut laisser pénétrer l'eau qui lessive les composants solubles et qui conduit à la rupture des collages des produits.

Pour faire face à ce problème, les inventeurs ont incorporé des stabilisants chimiques UV à la formulation de la sous-couche de flanc FE1 : le noir de carbone est généralement reconnu comme étant un des systèmes de protection contre les UV les plus efficaces à utiliser pour les élastomères. De même, l'ozone (un oxydant puissant) peut dégrader des composants en élastomère de la même manière que les UV. Les inventeurs ont résolu ce problème par l'utilisation d'un antioxydant et par le choix judicieux des élastomères (polymères saturés).

Avantageusement, d'un point de vue de procédé, les deux sous-couches de flanc (FE1, FE2) sont obtenues en fabrication par un procédé de co-extrusion. Les techniques de co-extrusion sont aujourd'hui bien maitrisées et permettent de conserver des temps de cycles de fabrication identique par rapport à un flanc mono couche.

De différents modes de réalisation sont proposés par les inventeurs pour en particulier garantir au pneumatique de l'invention un niveau de rigidité de dérive transversale suffisant pour un bon comportement routier du véhicule équipé de ces pneumatiques.

Avantageusement, le module élastique de rigidité de cisaillement de la deuxième sous-couche de flanc FE2 est préférentiellement compris dans l'intervalle [1.5; 10] MPa et encore préférentiellement est compris dans l'intervalle [2.5; 10] MPa.

En affectant à la deuxième sous-couche de flanc FE2 d'un pneumatique de l'invention un mélange élastomérique doté d'un module élastique de rigidité de cisaillement pouvant aller jusqu'à 10 MPa, on améliore la rigidité de dérive transversale par rapport à des conceptions usuelles, utile pour un bon comportement routier d'un véhicule équipé de ces pneumatiques. En effet, la conception usuelle des flancs vise un module élastique de rigidité de cisaillement inférieur ou égal à 1.5 MPa.

En outre, les bourrelets des pneumatiques de l'invention reposent notamment sur un équilibre entre les rigidités de cisaillements, et l'hystérèse des mélanges élastomériques les constituants. Le module élastique de rigidité de cisaillement G' de chaque sous-couche de flanc FE2 reste inférieur à 10 MPa pour que l'hystérèse reste à un niveau mesuré par une valeur Tan(δ)max inférieure ou égale à 0.10. L'invention fonctionne à partir d'un module élastique de rigidité de cisaillement de la couche de flanc supérieur ou égal à 1.5 MPa.

Selon un mode de réalisation préférée, chaque bourrelet comportant une couche de bourrage comprise au moins en partie entre la partie principale de l'armature de carcasse, le retournement de l'armature de carcasse et la portion radialement extérieure de la structure annulaire de renforcement, le mélange élastomérique constituant la couche de bourrage a une perte dynamique Tan(δ) max inférieure ou égale à 0.1.

L'augmentation du module élastique de rigidité de cisaillement du mélange élastomérique de la sous couche de flanc FE2 permet de baisser l'hystérèse de la couche de bourrage. Dans les conceptions usuelles des bourrelets, l'homme du métier choisit des couches de bourrage ayant un module élastique de cisaillement plutôt autour de 40 Mpa, et la perte dynamique s'en trouve pénalisée.

La couche de bourrage du bourrelet occupe en général un grand volume et subit de fortes déformations de cisaillements dues aux variations de tensions dans les renforts de la partie principale de la couche de carcasse et de son retournement. Le choix d'un mélange élastomérique de basse hystérèse contribue à maîtriser le niveau de dissipation viscoélastique.

Avantageusement, le bourrelet comprend une couche latérale de renforcement constituée d'un mélange élastomérique occupant un volume compris au moins en partie entre la deuxième couche de flanc, et le retournement de l'armature de carcasse.

Selon les inventeurs, la couche latérale de renforcement du bourrelet vient en complément de la première couche de bourrage apporter de la rigidité transversale. En fonction de ces propriétés matérielles en termes de Tan(δ)max et de rigidité dynamique de cisaillement, ledit renforcement permet d'ajuster l'équilibre de performances entre la résistance au roulement et le comportement routier.

Avantageusement, dans une variante de ce mode de réalisation, ladite couche latérale de renforcement d'au moins un bourrelet est constitué d'un mélange élastomérique dont la perte dynamique Tan (δ) max est inférieure ou égale 0.10.

Dans cette variante du mode de réalisation, les deux couches de mélanges à savoir la couche de bourrage et la couche latérale de renforcement vérifient la propriété d'avoir une perte dynamique Tan (δ) max inférieure à 0.10. Le gain en résistance au roulement est optimal, tout en ayant un comportement routier du pneumatique monté sur véhicule conforme aux attendus.

Dans un autre mode de réalisation de l'invention, dans chaque bourrelet une courbe de contact jante comprend les points du pneumatique en contact avec la jante. Ladite courbe de contact jante relie un premier point M1 du pneumatique axialement positionné le plus extérieurement, et en contact avec la j ante, et un deuxième point M2 du pneumatique également en contact avec la jante et situé au milieu de la portion rectiligne reliant le crochet au siège de la jante. La longueur de ladite courbe de contact jante est la distance curviligne du point M1 au point M2 le long de la courbe de contact. Ledit pneumatique comprenant également deux sections dans une coupe méridienne verticale du pneumatique gonflé, monté sur une jante, et écrasé sur un sol par une charge verticale où la charge, la pression de gonflage, étant déterminées dans une norme de spécifications telle que l'ETRTO (Organisation Européenne Technique des Pneumatiques et des jantes); une première section étant située dans l'aire de contact, et une deuxième section étant située du côté opposé à la précédente par rapport à l'axe de rotation du pneumatique. Dans la première section située dans l'aire de contact, dans au moins un premier bourrelet, la longueur de la courbe de contact j ante, LADC, est mesurée. Dans la deuxième section située à l'opposé de l'aire de contact par rapport à l'axe de rotation du pneumatique, dans au moins un deuxième bourrelet, la longueur de la courbe de contact jante, LCJ, est mesurée, alors le rapport de la différence des longueurs des courbes de contact jante des deux sections soit 100*(LADC-LCJ)/LCJ, est supérieur ou égal à 30%.

Dans ce mode de réalisation, le taux de variation de contact jante des pneumatiques de l'invention est nettement supérieur à celui constaté sur les pneumatiques de l'état de l'art.

Lorsque le pneumatique gonflé, monté sur une jante, est écrasé par une charge portée, les points du pneumatique en contact avec la jante peuvent varier d'un méridien à l'autre. Il s'ensuit que la longueur de la courbe de contact jante telle que définie précédemment varient également d'un méridien à l'autre.

Le pneumatique est conçu de manière à ce que la courbe de contact jante soit la plus longue possible dans l'aire de contact, en comparaison aux pneumatiques de l'état de l'art, et plus précisément dans le méridien au centre de l'aire de contact. Dans ces conditions, les inventeurs estiment que la contribution du contact jante à la rigidité de dérive est maximale.

Dans une coupe méridienne d'un pneumatique gonflé, monté sur une jante, et écrasé par la charge portée, on peut voir une première section du pneumatique qui passe par le centre de l'aire de contact. On entend par aire de contact l'ensemble des points du pneumatique, à un instant donné qui sont en contact avec le sol d'écrasement. On appelle centre de l'aire de contact le point de l'air de contact situé sur l'axe vertical OZ. On peut également voir à l'opposé de l'aire de contact par rapport à l'axe de rotation OY du pneumatique une autre section du pneumatique qui globalement défini un état déformé assimilable à l'état du gonflage axisymétrique.

Le taux de variation du contact jante correspond à la valeur maximale de l'évolution des longueurs de contact jante au tour de roue.

Selon les inventeurs, une étape essentielle de la conception d'un pneumatique de ce mode de réalisation consiste à modifier son profil extérieur dans la zone de contact avec la jante. Diverses solutions sont possibles comme par exemple, d'augmenter l'épaisseur axiale de la couche de flanc à la jonction avec la couche de protection. D'autres solutions consistent à modifier le profil extérieur de manière à obtenir un profil dans la zone de contact avec la même courbure que le crochet de jante. Une autre solution encore consiste à insérer un coussin de mélange dans la zone à la jonction des couches de flanc et de protection, au niveau du crochet de la jante. Ce coussin de mélange peut être constitué de préférence du même mélange que celui de la couche de flanc de manière à maintenir le coût de revient industriel. L'attendue vis-à-vis de ce coussin de mélange élastomérique est surtout son module élastique de rigidité de cisaillement qui avantageusement pourrait être par exemple égal à celui de la couche de flanc.

Avantageusement, le rapport de la différence des longueurs des courbes de contact jante des deux sections soit 100*(LADC-LCJ)/LCJ, est supérieur ou égal à 40%, préférentiellement supérieur ou égal à 50%, encore préférentiellement supérieur ou égal à 60%.

Le profil extérieur dans la zone de contact avec la jante peut être modifié de manière à viser un taux de variation de contact j ante. C'est donc un levier pour ajuster la rigidité de dérive transversale dans la recherche du compromis de performances entre la résistance au roulement et le comportement routier du pneumatique. La rigidité de dérive transversale est une fonction croissante du taux de variation de contact jante. Pour des taux de variation du contact jante supérieur ou égal à 60%, la modification du profil extérieur de la couche de flanc facilite le montage du bourrelet, mais des taux trop élevés au-delà de 100%, pourraient gêner la montabilité.

En complément aux caractéristiques principales de l'invention, les inventeurs ont identifié des leviers liés à la géométrie des couches de mélanges du bourrelet pour mieux optimiser encore le compromis de performances du pneumatique avec une résistance au roulement améliorée tout en ayant un bon comportement routier.

Avantageusement, la distance DRB étant la distance radiale d'une extrémité de la couche de bourrage radialement extérieure, ladite distance DRB est inférieure ou égale à 50% de la hauteur radiale H du pneumatique.

La hauteur H du pneumatique est la distance normale entre une première droite HH'parallèle à l'axe de rotation du pneumatique et tangente au point le plus radialement intérieur de la structure annulaire de renforcement, et une deuxième droite AA' également parallèle à l'axe de rotation du pneumatique et passant par le point le plus radialement extérieur de la bande de roulement. La hauteur radiale H est mesurée sur le pneumatique monté sur une jante et gonflé avec une pression de consigne conforme aux spécifications ETRTO (Organisation Européenne pour les jantes et les pneumatiques).

Avantageusement, la distance DRI étant la distance radiale d'une extrémité radialement intérieure de la couche latérale de renforcement à la droite HH', ladite distance radiale DRI est comprise dans l'intervalle [5% ; 25%] de la hauteur radiale H du pneumatique.

Avantageusement encore, la distance DRL étant la distance radiale de l'extrémité radialement extérieure de la couche latérale de renforcement à la droite (HH'), ladite distance radiale DRL est supérieure ou égale à 25% de la hauteur radiale H du pneumatique.

La couche latérale de renforcement comprise entre le flanc et le retournement de l'armature de carcasse contribue à la rigidité du bourrelet en renfort à la première couche de bourrage. Selon les inventeurs, son positionnement est ajusté par les côtes DRI et DRL de manière à résister aux sollicitations de flexions, d'extensions-compression du bourrelet lors du passage dans l'aire de contact.

Dans un mode avantageux de réalisation de l'invention, le retournement de l'armature de carcasse est plaqué contre la partie principale de l'armature de carcasse sur toute sa hauteur radialement extérieurement.

Comme dit plus haut, l'armature de carcasse est formée de renforts enrobés entre deux couches de mélanges élastomériques. Le retournement de l'armature de carcasse est plaqué contre la partie principale de l'armature de carcasse signifie que le retournement est en contact avec la partie principale de l'armature de carcasse. Le contact s'effectue selon une surface positionnée entre les deux couches d'enrobage de l'armature de carcasse.

Dans cette configuration, le volume de la première couche de bourrage est limité au strict minimum autour de la structure annulaire de renforcement. Cette configuration est très avantageuse pour la baisse de la résistance au roulement du bourrelet.

Dans un autre mode de réalisation, le pneumatique comporte une armature de renforcement du bourrelet axialement extérieurement à l'armature de carcasse, et axialement intérieurement au flanc.

L'armature de renforcement du bourrelet est formée de renforts parallèles entre eux, et enrobés entre deux couches de mélanges élastomériques. L'ajout de ce semi-fini entraîne un surcoût de la fabrication qu'il convient de compenser. Afin de limiter l'impact sur le coût de revient d'une telle solution, ce mode de réalisation peut être combiné avec le plaquage du retournement de l'armature de carcasse contre la partie principale de l'armature de carcasse.

Avantageusement, le mélange élastomérique constitutif d'au moins une couche parmi la couche de bourrage, et/ou la couche latérale de renforcement, et/ou la deuxième sous-couche de flanc FE2 a une composition à base d'un élastomère diénique, d'un système de réticulation, d'une charge renforçante, type Noir de Carbone 550, à un taux global compris entre 50 et 75 pce.

Encore avantageusement, le mélange élastomérique constitutif de la couche de bourrage, le mélange élastomérique constitutif de la couche latérale de renforcement, et le mélange élastomérique constitutif la sous-couche de flanc FE2 ont la même composition.

Par élastomère (ou indistinctement caoutchouc) «diénique», on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. L'élastomère diénique utilisé est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène styrène (SIR), les copolymères de butadiène-styrène-isoprène (SBIR) et les compositions de ces élastomères.

Un mode de réalisation préférentiel consiste à utiliser un élastomère « isoprénique », c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les compositions de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR (E-SBR ou S-SBR) utilisé en coupage ou non avec un autre élastomère, par exemple du type BR.

La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non aromatique (notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C), des agents facilitant la mise en œuvre (processabilité) des compositions à l'état cru, des résines tackifiantes, un système de réticulation à base soit de soufre, soit de donneurs de soufre et/ou de peroxyde, des accélérateurs, des activateurs ou retardateurs de vulcanisation, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt ou de nickel.

### Brève description des dessins

D'autres détails et caractéristiques avantageux de l'invention ressortiront ci-après de la description des exemples de réalisation de l'invention en référence aux figures qui représentent des vues méridiennes de schémas d'un pneumatique selon des modes de réalisation de l'invention. Les figures ne sont pas représentées à l'échelle pour en simplifier la compréhension.

La figure 1 comprend une vue 1-A qui montre une section d'un pneumatique de l'invention dans un plan méridien, et une vue 1-B qui représente un grossissement d'une portion de la vue méridienne 1-A entourée d'un cercle en tirets montrant le bourrelet d'un pneumatique de l'invention.

Les figures 2-A, 2-B, 2-C, et 2-D montrent des modes de réalisation de l'invention avec des modifications du profil extérieur des couches de flanc (FE1, FE2) pour faciliter le contact avec la jante.

La figure 3 représente une coupe méridienne du pneumatique gonflé, monté sur une jante et écrasé par une charge portée. On voit une première section dans l'aire de contact et une deuxième section opposée à l'aire de contact par rapport à l'axe (OY). Cette figure illustre la détermination du taux de variation de contact avec la jante.

Les figures 4-A et 4-B représentent la visualisation des principales côtes du bourrelet du pneumatique.

### Description détaillée de l'invention

L'invention a été mise en œuvre sur un pneumatique tourisme de dimension 245/45R18, selon la norme de spécifications de l'ETRTO (Organisation Technique Européenne des jantes et Pneumatiques). Un tel pneumatique peut porter une charge de 800 kilos, gonflé à une pression de 250 kPa.

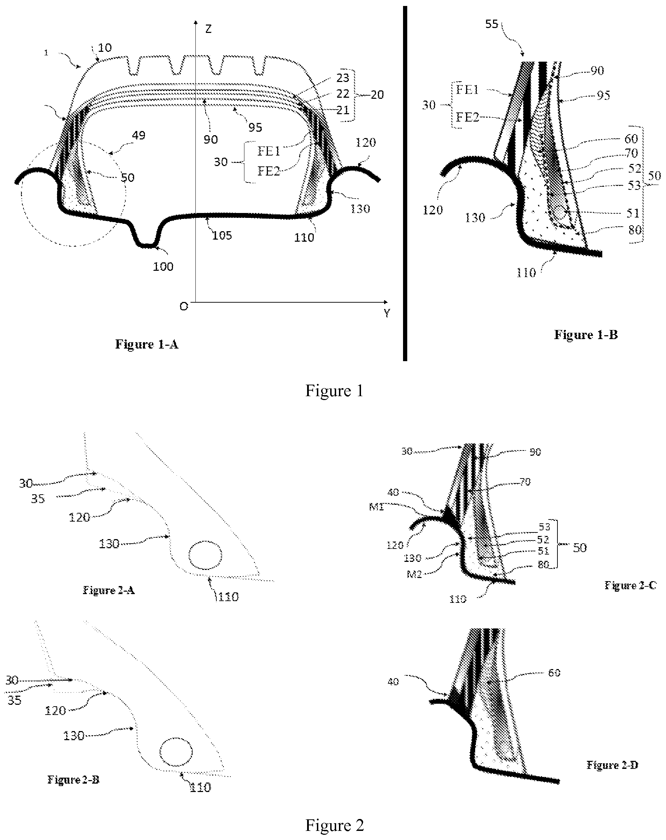

Sur la figure 1-A, le pneumatique de référence générale 1 comprend une armature de carcasse 90 constituée de renforts enrobés de composition caoutchouteuse, et deux bourrelets 50 en contact avec une jante 100. Une zone 49 délimitée par un cercle en pointillé définit l'un des deux bourrelets 50 du pneumatique dont un grossissement est proposé sur la figure 1-B. L'armature de carcasse 90 est ancrée dans chacun des bourrelets 50. Le pneumatique comporte en outre une armature de sommet 20 comprenant deux couches de travail 21, 22, et une couche de frettage 23. Chacune des couches de travail 21 et 22 est renforcée par des éléments de renforcement filaires qui sont parallèles dans chaque couche et croisés d'une couche à l'autre, en faisant avec la direction circonférentielle des angles compris entre 10° et 70°. La couche de frettage 23, disposée radialement à l'extérieur de l'armature de sommet 20, cette couche de frettage 23 étant formée d'éléments de renforcement orientés circonférentiellement et enroulés en spirale. Une bande de roulement 10 est posée radialement sur la couche de frettage 23; c'est cette bande de roulement 10 qui assure le contact du pneumatique 1 avec un sol. Le pneumatique 1 représenté est un pneu « tubeless » : il comprend une « gomme intérieure » 95 en composition caoutchouteuse imperméable au gaz de gonflage, recouvrant la surface intérieure du pneumatique.

La couche de flanc 30 comprend deux sous-couches (FE1, FE2). La première sous-couche FE1 est positionnée axialement extérieurement de manière à constituer la paroi latérale du pneumatique en contact avec l'environnement ambiant. La deuxième sous-couche FE2 32 est en contact au moins en partie avec l'armature de carcasse 90. Sur les figures 1-A et 1-B, la première sous-couche FE1 a un fond sombre, alors que la deuxième sous-couche FE2 a un fond hachuré.

La partie de la jante 100 qui interagit avec le pneumatique dans le cadre de l'invention est axisymétrique par rapport à l'axe de rotation du pneumatique.

Dans un plan méridien, la jante 100 comprend au moins un crochet 120 situé à une extrémité axiale, et relié à un siège 110 qui est destiné à recevoir une face du bourrelet située le plus radialement intérieurement. Entre le siège 110 et le crochet 120, prend place une portion rectiligne 130 qui relie le crochet de jante 120 au siège 110 par des congés de raccords. Le crochet de la jante 120 prolongée par la portion rectiligne 130 limite axialement le déplacement des bourrelets lors du gonflage.

Le bourrelet 50 comprend en partie une armature de carcasse 90 qui comporte une partie principale 52, puis s'enroule autour d'une structure annulaire de renforcement 51 pour former un retournement 53. Une couche de bourrage 70 est positionnée entre la partie principale 52 de l'armature de carcasse 90 et de son retournement 53. Selon les modes de réalisation, le bourrelet 50 peut comprendre une couche latérale de renforcement 60, positionnée axialement extérieurement au retournement 53, et axialement intérieurement à la couche de flancs 30. Axialement le plus intérieurement au bourrelet 50, une couche étanche 95 constitue la paroi intérieure en contact avec l'air interne de gonflage.

Ledit bourrelet 50 comprend également une couche de protection 80 qui est en contact axialement extérieurement avec une portion rectiligne 130 de la jante de façon à limiter le déplacement axial du bourrelet. Ladite couche de protection 80 comprend aussi une portion destinée à être en contact avec la jante au niveau du siège de jante 110. Une couche de flanc 30 coopère avec le bourrelet 50 et constitue une paroi latérale extérieure.

Sur la figure 2-A, on a représenté les profils extérieurs d'un bourrelet 50 d'un pneumatique selon un mode de réalisation particulier de l'invention en comparaison à celui d'un pneumatique de conception usuelle. Le bourrelet 50 est représenté dans une section opposée à l'aire de contact. Les deux profils se différencient dans une zone au niveau du crochet de jante 120. La référence 30 indique le profil d'un pneumatique de l'état de l'art, et la référence 35 montre la modification du profil opérée sur le pneumatique de l'invention pour faciliter le contact avec la jante 100.

Sur la figure 2-B, nous avons la même représentation que sur la figure 2-A, mais les profils sont montrés au centre de l'aire de contact avec le sol. Le pneumatique est en contact avec tout le crochet de jante 120 contrairement à la figure 2-A. Le taux de variation de contact jante traduit cette évolution du contact jante.

Dans un autre mode de réalisation représentée sur la figure 2-C, on trouve un coussin de mélange élastomérique 40 (modification située à l'extrémité radialement intérieure du flanc 30), destiné à être en contact avec le crochet de jante 120. Le coussin de mélange 40 est délimité radialement intérieurement par une courbe qui épouse le profil du crochet de jante 120. Un premier côté du coussin de mélange élastomérique 40 a une forme géométrique appropriée qui anticipe le contact avec la courbure du crochet de jante de manière à épouser la forme du crochet de jante 120 lors du contact, un deuxième côté du coussin de mélange élastomérique prolonge un côté extérieur d'un flanc en contact avec l'air ambiant, un troisième côté du coussin de mélange élastomérique 40 est en contact avec l'extrémité radialement intérieure du flanc et enfin un quatrième côté du coussin de mélange élastomérique est en contact avec la couche de protection 80.

Sur la figure 2-C, la courbe de contact jante s'étend depuis un premier point M1 du pneumatique axialement positionné le plus extérieurement, et en contact avec la jante, et un deuxième point M2 du pneumatique également en contact avec la jante et situé au milieu de la portion rectiligne reliant le crochet 120 au 110 siège de la jante. La longueur de ladite courbe de contact jante est la distance curviligne du point M1 au point M2 le long de la courbe de contact jante.

La figure 2-D est une variante du mode de réalisation précédente caractérisée par la présence d'une couche latérale de renforcement 60 du bourrelet 50, positionnée axialement extérieurement au retournement 53 de l'armature de carcasse 90, et axialement intérieurement à la couche de flanc 30.

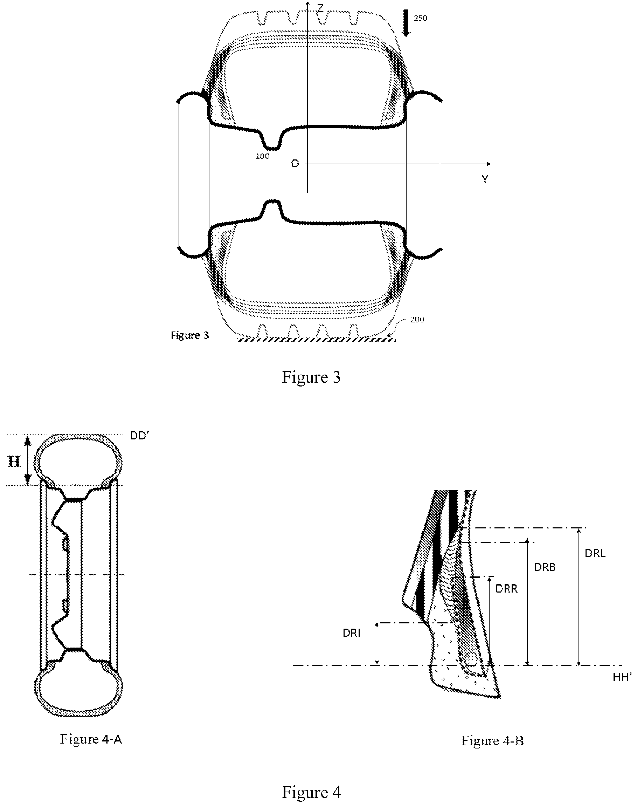

La figure 3 est une vue dans le plan vertical d'un pneumatique de l'invention selon un mode de réalisation précédent. Le pneumatique est gonflé, monté sur une jante 100 et écrasé par la charge portée 250 sur un sol 200. On peut voir une première section méridienne dans l'aire contact et une deuxième section méridienne à l'opposé de l'aire de contact. Dans la première section située dans l'aire de contact, dans au moins un premier bourrelet, on mesure la longueur de la courbe de contact jante 100, LADC. Dans la deuxième section dans au moins un deuxième bourrelet, on mesure également la longueur de la courbe de contact j ante, LCJ. Le rapport de la différence des longueurs des courbes de contact jante des deux sections soit 100*(LADC-LCJ)/LCJ, est supérieur ou égal à 30%, et dans le cas présent est égal à 62%.

Sur la figure 4-A, la détermination de la hauteur H est illustrée. La hauteur H du pneumatique est la distance normale entre une première droite HH' parallèle à l'axe de rotation du pneumatique et tangente au point le plus radialement intérieur de la structure annulaire de renforcement, et entre une deuxième droite DD' également parallèle à l'axe de rotation du pneumatique et passant par le point le plus radialement extérieur de la bande de roulement. La hauteur radiale H est mesurée sur le pneumatique monté sur une jante et gonflé avec une pression de consigne conforme aux spécifications ETRTO (Organisation Européenne pour les jantes et les pneumatiques).

Sur la figure 4-B on a représenté les paramètres géométriques du bourrelet en lien avec l'invention. Les hauteurs sont définies à partir de la droite HH', qui est tangente à la tringle 51 en son point radialement le plus intérieur :

DRI est la distance radiale par rapport à HH' de l'extrémité radialement intérieure de la couche latérale de renforcement 60. La distance radiale DRI est inférieure ou égale à 20% de la hauteur radiale H du pneumatique, et vaut 5mm dans l'exemple présenté ici ;

DRL est la distance radiale par rapport à la droite HH' de l'extrémité radialement extérieure de la couche latérale de renforcement 60. La distance radiale DRL est supérieure ou égale à 25% de la hauteur radiale H du pneumatique et vaut 38 mm dans l'exemple présenté ici ;

DRR est la distance radiale par rapport à HH' de l'extrémité du retournement de l'armature de carcasse 90. La distance radiale DRR étant supérieure ou égale à 10% de la hauteur radiale H du pneumatique et vaut 20 mm dans l'exemple présenté ici ;

DRB est la distance radiale par rapport à HH' de l'extrémité radialement extérieure de la couche de bourrage 70, et vaut 28 mm dans l'exemple présenté ici.

Le tableau n°1 qui suit donne les compositions de mélanges élastomériques d'un pneumatique de l'invention. Les principaux mélanges utilisés sont listés en exprimant pour chacun les principaux ingrédients exprimés en pce (partie en poids pour cent parties en poids d'élastomère) :

**[Tableau 1]**

| | Elastomère NR (Caoutchou c naturel) | Elastomère BR (Butadiène ) | Charge renforçant e noir de carbone | Agent anti-oxydan t | Soufr e | Accélérateu r | Résine renforçant e | Durcisseu r |
|---|---|---|---|---|---|---|---|---|
| M1 | 100 | 0 | 75 (N326) | 1.5 | 8.5 | 0.95 | 12 | 4.18 |
| M2 | 100 | 0 | 75 (N326) | 2 | 7.5 | 0.97 | 12 | 6.8 |
| M3 | 35 | 65 | 30 (N550) | 1.3 | 8.0 | 4.75 | 0 | 0 |
| | | | 10 (Silice) | | | | | |
| M4 | 35 | 65 | 48 (N550) | 5 | 1.4 | 1.4 | 18 | 0 |

Les mélanges de l'invention utilisés dans cet exemple sont à base d'élastomère de caoutchouc naturel, ou d'un coupage de caoutchouc naturel et de butadiène pour les mélanges M3 et M4, renforcés par du noir de carbone. Des plastifiants (résine renforçante) entrent dans la composition pour faciliter la processabilité des mélanges. Les mélanges comprennent aussi des agents de vulcanisation, soufre, accélérateur, et des agents de protection.

Le mélange M4 qui constitue la première couche de flanc FE1 comprend un agent antioxydant à 5 pce et du noir de carbone à 48 pce, de manière à garantir la protection contre les agressions dus à l'exposition à la lumière et à l'attaque de l'ozone.

Les propriétés mécaniques et viscoélastiques associées, mesurées à 23°C sous une amplitude de déformation de 10% sont résumées dans le tableau n°2 :

**[Tableau 2]**

| | G' | G" | Tan (δ)max |
|---|---|---|---|
| M1 | 46 | 7 | 0.2 |
| M2 | 48 | 8 | 0.2 |
| M3 | 2.47 | 0.06 | 0.03 |
| M4 | 1.26 | 0.100 | 0.08 |

Le mélange élastomérique M4 a un niveau d'allongement à la rupture de 300 % mesuré à 100°C, alors que le niveau d'allongement à la rupture du mélange M3 est de 80 % également mesuré à 100°C.

Des configurations de pneumatiques de l'invention ont été testées pour bien mettre en exergue les performances apportées par l'invention. Les résultats de ces tests sont comparés à ceux obtenus pour des pneumatiques témoins.

Le témoin T1 conforme aux figures 1-A, et 1-B, correspond à un pneumatique de conception usuelle qui comprend une couche de bourrage constituée du mélange élastomérique M1, une couche latérale de renforcement du bourrelet constituée du mélange élastomérique M2, et les deux sous-couches de flanc (FE1, FE2) constituées du mélange élastomérique M4. Le profil de la couche de flanc est de conception usuelle c'est-à-dire qu'il n'a pas été modifié pour faciliter le contact avec la jante.

Un deuxième témoin T2 reprend les spécifications de T1, mais les mélanges élastomériques des deux sous-couches de flanc sont constitués du même mélange M3.

Le premier pneumatique P1 conforme à l'invention reprend les spécifications du témoin T1, mais la première sous-couche de flanc FE1 est constituée du mélange M4 et la deuxième sous-couche de flanc FE2 est constituée du mélange M3.

D'une façon générale, tous les pneumatiques conformes à l'invention ont la première couche de flanc FE1 constituée du mélange M4, et la deuxième couche de flanc FE2 constituée du mélange M3.

Le deuxième pneumatique P2 conforme à l'invention, contient une couche de bourrage constituée du mélange M3 et contient également une couche latérale de renforcement constituée du mélange M2.

Le troisième pneumatique P3 conforme à l'invention a la couche de bourrage et la couche latérale de renforcement constituées du même mélange M3.

Enfin, le quatrième pneumatique P4 de l'invention diffère de P3, par la modification du profil de la couche de flanc pour un taux de variation de contact jante supérieur à 30%.

Les configurations des pneumatiques P1, P2, et P3 de l'invention sont illustrées à la figure 1-B. Pour ce qui est de la configuration P4 des illustrations sont observables sur les figures 2-A, 2-B, et 2-D.

Le taux de variation de contact jante est de 62% pour P4, après une modification partielle du profil de la couche de flanc dans la zone du contact avec la jante, comme représenté sur les figures 2-A et 2-B.

La performance industrielle est mesurée selon le taux de rebuts pour défaut de moulage du flanc. Aucun des pneumatiques de l'invention P1, P2, P3 et P4 ne présente des défauts de moulage affectant les marquages, et sont satisfaisant en performance industriel comme T1. En revanche, le témoin T2 avec un flanc monocouche constitué du mélange M3 conduit à de nombreux rebuts dus à un démoulage difficile.

Le test de résistance au roulement a été opéré selon la norme ISO 28580. Pour un pneumatique testé, le résultat est le coefficient de résistance au roulement qui représente le rapport de la force de résistance à l'avancée du véhicule par hystérèse des pneumatiques divisé par la charge portée.

Les mesures de rigidité de dérive transversales ont été faites sur des machines de mesures dédiées comme par exemple celles commercialisées par la société MTS.

Un résultat supérieur (respectivement inférieur) à 100% signifie une amélioration (respectivement une dégradation) de la performance considérée.

Les résultats obtenus sont synthétisés dans le tableau n° 3 suivant :

**[Tableau 3]**

| | Résistance au roulement | Rigidité de dérive transversale |
|---|---|---|
| T1 | 100 | 100 |
| T2 | 102 | 101 |
| P1 | 102 | 100 |
| P2 | 104 | 100 |
| P3 | 112 | 98 |
| P4 | 111 | 101 |

Tous les pneumatiques de l'invention réalisent le compromis recherché entre la résistance au roulement et la performance industrielle. La résistance au roulement est améliorée de 2% à 12% selon les variantes testées.

La rigidité de dérive transversale des pneumatiques a été mesurées. Les pneumatiques P1 et P3 ont une rigidité de dérive transversale respectivement de 100% et de 98% sans affecter de façon perceptible le comportement du véhicule. Les pneumatiques P2 et P4 ont des performances supérieures ou égales à la cible recherchée.

Toutes les variantes de pneumatiques conformes à l'invention présentées sont produites sans évolution des procédés et restent avec un coût de revient industriel usuel.

Par ailleurs, l'invention peut se généraliser à d'autres architectures de bourrelet que celles décrites ici, comme par exemple un bourrelet ayant une première couche de bourrage, et une deuxième couche latérale de renforcement, alors même que l'armature de carcasse ne comprend pas un retournement.

## Revendications

1. Pneumatique (1) pour véhicule de tourisme comprenant dans un plan méridien :
deux bourrelets (50) destinés à être montés sur une jante, deux couches de flancs (30) reliés aux bourrelets (50), un sommet (20) comportant une bande de roulement (10), le sommet (20) ayant un premier côté relié à l'extrémité radialement extérieure de l'un des deux couches de flancs (30) et ayant un deuxième côté relié à l'extrémité radialement extérieure de l'autre des deux couches de flancs (30) ;
au moins une armature de carcasse (90) s'étendant depuis les deux bourrelets (50) jusqu'au sommet (20), l'armature de carcasse (90) comportant une pluralité d'éléments de renforcement de carcasse et étant ancrée dans les deux bourrelets (50) par un retournement autour d'une structure annulaire de renforcement (51), de manière à former dans chaque bourrelet une partie principale (52) et un retournement (53);
chaque couche de flanc (30) étant constituée de deux sous-couches (FE1, FE2) axialement superposées, une première sous-couche de flanc (FE1) délimitée par un premier côté axialement le plus extérieur constituant une paroi latérale du pneumatique en contact avec l'air ambiant, et un deuxième côté axialement intérieur défini de manière à ce que ladite sous-couche de flanc (FE1) ait une épaisseur axiale moyenne E1, et occupant un volume V1 ;
chaque couche de flanc comprenant également une deuxième sous-couche de flanc (FE2) dont un premier côté coïncide avec le deuxième côté de la première sous-couche de flanc (FE1), et dont un deuxième côté, axialement intérieur, étant en contact au moins en partie avec l'armature de carcasse (50), ladite sous-couche de flanc (FE2) ayant une épaisseur axiale moyenne E2, et occupant un volume V2 ; le rapport V1/(V1+V2) étant inférieur ou égal à 0.3, **caractérisé en ce que** l'épaisseur E1 de la première sous-couche de flanc (FE1) est supérieure ou égale à 0.7 mm, **en ce que** l'allongement à rupture du mélange élastomérique constituant la première sous-couche de flanc (FE1) est supérieur ou égal 200% mesuré à une température de 100°C, **et en ce que** la perte dynamique de la deuxième sous couche de flanc (FE2), Tan (δ) max est inférieure ou égale à 0.10, la perte dynamique étant mesurées selon la norme ASTM D 5992-96 en enregistrant la réponse d'un échantillon de mélange élastomérique vulcanisé ayant la forme d'une éprouvette cylindrique de 2 mm d'épaisseur et de 78 mm² de section, soumis à une sollicitation sinusoïdale en cisaillement simple alterné, à la fréquence de 10Hz, à une température de 100°C et pour une déformation égale à 10%, à partir d'un balayage en amplitude de déformation de 0,1% à 50% pour le cycle aller.

2. Pneumatique (1) selon la revendication 1 dans lequel le module élastique de rigidité de cisaillement de la deuxième sous couche de flanc FE2 est compris dans l'intervalle [1.5; 10] MPa et préférentiellement est compris dans l'intervalle [2.5; 10] MPa.

3. Pneumatique (1) selon l'une des revendications précédentes, chaque bourrelet (50) comportant une couche de bourrage (70) comprise au moins en partie entre la partie principale de l'armature de carcasse (52), le retournement (53) de l'armature de carcasse et la portion radialement extérieure de la structure annulaire de renforcement, **dans lequel** le mélange élastomérique constituant la couche de bourrage a une perte dynamique Tan(δ) max inférieure ou égale à 0.1, la perte dynamique étant mesurée selon la norme ASTM D 5992-96 en enregistrant la réponse d'un échantillon de mélange élastomérique vulcanisé ayant la forme d'une éprouvette cylindrique de 2 mm d'épaisseur et de 78 mm² de section, soumis à une sollicitation sinusoïdale en cisaillement simple alterné, à la fréquence de 10Hz, à une température de 100°C et pour une déformation égale à 10%, à partir d'un balayage en amplitude de déformation de 0,1% à 50% pour le cycle aller.

4. Pneumatique (1) selon l'une des revendications précédentes, **dans lequel** le bourrelet comprend une couche latérale de renforcement (60) constitué d'un mélange élastomérique occupant un volume compris au moins en partie entre la deuxième couche de flanc (30), et le retournement de l'armature de carcasse (53).

5. Pneumatique (1) selon la revendication 4, **dans lequel** la couche latérale de renforcement du bourrelet (60) est constituée d'un mélange élastomérique dont la perte dynamique Tan(δ)max est inférieure ou égale à 0.10, la perte dynamique étant mesurée selon la norme ASTM D 5992-96 en enregistrant la réponse d'un échantillon de mélange élastomérique vulcanisé ayant la forme d'une éprouvette cylindrique de 2 mm d'épaisseur et de 78 mm² de section, soumis à une sollicitation sinusoïdale en cisaillement simple alterné, à la fréquence de 10Hz, à une température de 100°C et pour une déformation égale à 10%, à partir d'un balayage en amplitude de déformation de 0,1% à 50% pour le cycle aller.

6. Pneumatique (1) selon l'une des revendications précédentes, dans chaque bourrelet (50) une courbe de contact jante comprenant les points du pneumatique (1) en contact avec la jante (100); ladite courbe de contact jante reliant un premier point M1 du pneumatique axialement positionné le plus extérieurement, et en contact avec la jante, et un deuxième point M2 du pneumatique également en contact avec la jante et situé au milieu de la portion rectiligne (130) reliant le crochet (120) au siège (110) de la jante; ledit pneumatique (1) comprenant également deux sections dans une coupe méridienne verticale du pneumatique gonflé, monté sur une jante, et écrasé sur un sol par une charge verticale (250) où la charge, la pression de gonflage, étant déterminées dans une norme de spécifications telle que l'ETRTO (Organisation Européenne Technique des Pneumatiques et des jantes) ; une première section étant située dans l'aire de contact, et une deuxième section étant située du côté opposé à la précédente par rapport à l'axe de rotation du pneumatique ;
dans la première section située dans l'aire de contact, dans au moins un premier bourrelet, la longueur de la courbe de contact jante, LADC, étant mesurée;
dans la deuxième section située à l'opposé de l'aire de contact par rapport à l'axe de rotation du pneumatique, dans au moins un deuxième bourrelet, la longueur de la courbe de contact jante, LCJ, étant mesurée, **dans lequel** le rapport de la différence des longueurs des courbes de contact jante des deux sections soit 100*(LADC-LCJ)/LCJ, est supérieur ou égal à 30%.

7. Pneumatique (1) selon la revendication précédente, **dans lequel** le rapport de la différence des longueurs des courbes de contact jante des deux sections soit 100*(LADC-LCJ)/LCJ, est supérieur ou égal à 40%, préférentiellement supérieur ou égal à 50%, encore préférentiellement supérieur ou égal à 60%.

8. Pneumatique (1) selon l'une des revendications précédentes la distance DRB étant la distance radiale d'une extrémité de la couche de bourrage (70) radialement extérieure **dans lequel** ladite distance DRB est inférieure ou égale à 50% de la hauteur radiale H du pneumatique (1).

9. Pneumatique (1) selon l'une des revendications 4 à 8, la distance DRI étant la distance radiale d'une extrémité radialement intérieure de la couche latérale (60) de renforcement à la droite (HH') **dans lequel** ladite distance radiale DRI est comprise dans l'intervalle [5% ; 20%] de la hauteur radiale H du pneumatique (1).

10. Pneumatique (1) selon l'une des revendications 4 à 9, la distance DRL étant la distance radiale de l'extrémité radialement extérieure de la couche latérale de renforcement (60) à la droite (HH'), **dans lequel** ladite distance radiale DRL est supérieure ou égale à 25% de la hauteur radiale H du pneumatique (1).

11. Pneumatique (1) selon l'une des revendications précédentes, **dans lequel** le retournement (53) de l'armature de carcasse (90) est plaqué contre la partie principale (52) de l'armature de carcasse (90) sur toute sa hauteur radialement extérieurement, le retournement (53) étant en contact avec la partie principale (52) de l'armature de carcasse (90).

12. Pneumatique (1) selon l'une des revendications précédentes **dans lequel** ledit pneumatique comporte une armature de renforcement du bourrelet (50) axialement extérieurement au retournement (53) de l'armature de carasse (90), et axialement intérieurement au flanc (30).

13. Pneumatique (1) selon l'une des revendications 4 à 12, **dans lequel** le mélange élastomérique constitutif d'au moins une couche parmi la couche de bourrage (70), et/ou la couche latérale de renforcement (60) et/ou la sous-couche de flanc (FE2) a une composition à base d'un élastomère diénique, d'un système de réticulation, d'une charge renforçante, type Noir de Carbone N550, à un taux global compris entre 50 et 75 pce.

14. Pneumatique (1) selon la revendication 13, **dans lequel,** le mélange élastomérique constitutif de la couche de bourrage (70), le mélange élastomérique constitutif de la couche latérale de renforcement (60), et le mélange élastomérique constitutif la sous-couche de flanc (FE2) ont la même composition.

## Patentansprüche

1. Reifen (1) für einen Personenkraftwagen, umfassend in der Meridianebene:
zwei Wülste (50), die dazu bestimmt sind, auf einer Felge montiert zu werden, zwei Flankenlagen (30), die mit den Wülsten (50) verbunden sind, einen Gürtel (20), der einen Laufstreifen (10) beinhaltet, wobei der Gürtel (20) eine erste Seite hat, die mit dem radial äußeren Ende der einen der beiden Flankenlagen (30) verbunden ist, und eine zweie Seite hat, die mit dem radial äußeren Ende der anderen der beiden Flankenlagen (30) verbunden ist;
mindestens eine Karkassenverstärkung (90), die sich von den beiden Wülsten (50) aus bis zu dem Gürtel (20) erstreckt, wobei die Karkassenverstärkung (90) eine Vielzahl von Karkassenfestigkeitselementen beinhaltet und in den beiden Wülsten (50) durch einen Umschlag um eine ringförmige Festigkeitsstruktur (51) herum verankert ist, so dass in jeder Wulst ein Hauptteil (52) und ein Umschlag (53) gebildet werden;
wobei jede Flankenlage (30) aus zwei axial übereinander liegenden Teillagen (FE1, FE2) besteht, einer ersten Flankenteillage (FE1), die durch eine axial äußerste erste Seite begrenzt wird, die eine Seitenwand des Reifens in Kontakt mit der Außenluft bildet, und eine axial innere zweite Seite, die so definiert ist, dass die Flankenteillage (FE1) eine mittlere axiale Dicke E1 hat und ein Volumen V1 einnimmt;
wobei jede Flankenlage auch eine zweite Flankenteillage (FE2) umfasst, bei der eine erste Seite mit der zweiten Seite der ersten Flankenteillage (FE1) zusammenfällt und bei der eine axial innere zweite Seite mindestens zum Teil mit der Karkassenverstärkung (50) in Kontakt ist, wobei die Flankenteillage (FE2) eine mittlere axiale Dicke E2 hat und ein Volumen V2 einnimmt; wobei das Verhältnis V1/(V1+V2) kleiner oder gleich 0,3 ist, **dadurch gekennzeichnet, dass** die Dicke E1 der ersten Flankenteillage (FE1) größer oder gleich 0,7 mm ist, dass die Bruchdehnung des Elastomergemisches, aus dem die erste Flankenteillage (FE1) besteht, gemessen bei einer Temperatur von 100 °C, größer oder gleich 200 % ist, dass der dynamische Verlustfaktor der zweiten Flankenteillage (FE2), Tan (δ) max, kleiner oder gleich 0,10 ist, wobei der dynamische Verlustfaktor nach der Norm ASTM D 5992-96 gemessen wird, indem die Antwort einer Probe aus vulkanisiertem Elastomergemisch mit der Form eines zylindrischen Probekörpers mit 2 mm Dicke und 78 mm² Querschnitt aufgezeichnet wird, die einer einfachen alternierenden sinusförmigen Scherbeanspruchung mit der Frequenz von 10 Hz, bei einer Temperatur von 100 °C und bei einer Verformung von 10 %, ausgehend von einem Amplitudensweep von 0,1 % bis 50 % für den Hin-Zyklus, unterzogen wird.

2. Reifen (1) nach Anspruch 1, wobei der elastische Scherfestigkeitsmodul der zweiten Flankenteillage FE2 in dem Intervall [1,5; 10] MPa liegt und bevorzugt in dem Intervall [2,5; 10] MPa liegt.

3. Reifen (1) nach einem der vorhergehenden Ansprüche, wobei jede Wulst (50) eine Wulstlage (70) beinhaltet, die mindestens zum Teil zwischen dem Hauptteil der Karkassenverstärkung (52), dem Umschlag (53) der Karkassenverstärkung und dem radial äußeren Abschnitt der ringförmigen Festigkeitsstruktur liegt, wobei das Elastomergemisch, aus dem die Wulstlage besteht, einen dynamischen Verlustfaktor Tan(δ) max kleiner oder gleich 0,1 hat, wobei der dynamische Verlustfaktor nach der Norm ASTM D 5992-96 gemessen wird, indem die Antwort einer Probe aus vulkanisiertem Elastomergemisch mit der Form eines zylindrischen Probekörpers mit 2 mm Dicke und 78 mm² Querschnitt aufgezeichnet wird, die einer einfachen alternierenden sinusförmigen Scherbeanspruchung mit der Frequenz von 10 Hz, bei einer Temperatur von 100 °C und bei einer Verformung von 10 %, ausgehend von einem Amplitudensweep von 0,1 % bis 50 % für den Hin-Zyklus, unterzogen wird.

4. Reifen (1) nach einem der vorhergehenden Ansprüche, wobei die Wulst eine seitliche Festigkeitslage (60) umfasst, die aus einem Elastomergemisch besteht und ein Volumen einnimmt, das mindestens zum Teil zwischen der zweiten Flankenlage (30) und dem Umschlag der Karkassenverstärkung (53) liegt.

5. Reifen (1) nach Anspruch 4, wobei die seitliche Festigkeitslage der Wulst (60) aus einem Elastomergemisch besteht, dessen dynamischer Verlustfaktor Tan(δ) max kleiner oder gleich 0,10 ist, wobei der dynamische Verlustfaktor nach der Norm ASTM D 5992-96 gemessen wird, indem die Antwort einer Probe aus vulkanisiertem Elastomergemisch mit der Form eines zylindrischen Probekörpers mit 2 mm Dicke und 78 mm² Querschnitt aufgezeichnet wird, die einer einfachen alternierenden sinusförmigen Scherbeanspruchung mit der Frequenz von 10 Hz bei einer Temperatur von 100 °C und bei einer Verformung von 10 %, ausgehend von einem Amplitudensweep von 0,1 % bis 50 % für den Hin-Zyklus, unterzogen wird.

6. Reifen (1) nach einem der vorhergehenden Ansprüche, wobei in jeder Wulst (50) eine Felgenkontaktkurve die Punkte des Reifens (1) in Kontakt mit der Felge (100) umfasst; wobei die Felgenkontaktkurve einen ersten Punkt M1 des Reifens, der axial am weitesten außen angeordnet ist und in Kontakt mit der Felge ist, und einen zweiten Punkt M2 des Reifens, der ebenfalls in Kontakt mit der Felge ist und in der Mitte des geradlinigen Abschnitts (130), der das Horn (120) mit dem Bett (110) der Felge verbindet, gelegen ist, verbindet; wobei der Reifen (1) auch zwei Bereiche in einem vertikalen Meridianschnitt des luftgefüllten, auf einer Felge montierten und durch eine vertikale Last (250) auf einen Boden gedrückten Reifens umfasst, wobei die Last, der Fülldruck in einer Spezifikationsnorm wie der ETRTO (European Tyre and Rim Technical Organisation) bestimmt werden; wobei ein erster Bereich in der Kontaktfläche gelegen ist und wobei ein zweiter Bereich auf der in Bezug auf die Rotationsachse des Reifens zu der vorhergehenden entgegengesetzten Seite gelegen ist;
wobei in dem ersten Bereich, der in der Kontaktfläche gelegen ist, in mindestens einer ersten Wulst die Länge der Felgenkontaktkurve, LADC, gemessen wird;
wobei in dem zweiten Bereich, der in Bezug auf die Rotationsachse des Reifens entgegengesetzt zu der Kontaktfläche gelegen ist, in mindestens einer zweiten Wulst die Länge der Felgenkontaktkurve, LCJ, gemessen wird, wobei das Verhältnis der Differenz der Längen der Felgenkontaktkurven der beiden Bereiche, d. h. 100* (LADC-LCJ)/LCJ, größer oder gleich 30 % ist.

7. Reifen (1) nach dem vorhergehenden Anspruch, wobei das Verhältnis der Differenz der Längen der Felgenkontaktkurven der beiden Bereiche, d. h. 100* (LADC-LCJ)/LCJ, größer oder gleich 40 %, bevorzugt größer oder gleich 50 %, noch bevorzugter größer oder gleich 60 % ist.

8. Reifen (1) nach einem der vorhergehenden Ansprüche, wobei der Abstand DRB der radiale Abstand von einem Ende der radial äußeren Wulstlage (70) ist, wobei der Abstand DRB kleiner oder gleich 50 % der radialen Höhe H des Reifens (1) ist.

9. Reifen (1) nach einem der Ansprüche 4 bis 8, wobei der Abstand DRI der radiale Abstand eines radial inneren Endes der seitlichen Festigkeitslage (60) zu der Geraden (HH') ist, wobei der radiale Abstand DRI in dem Intervall [5 %; 20 %] der radialen Höhe H des Reifens (1) liegt.

10. Reifen (1) nach einem der Ansprüche 4 bis 9, wobei der Abstand DRL der radiale Abstand des radial äußeren Endes der seitlichen Festigkeitslage (60) zu der Geraden (HH') ist, wobei der radiale Abstand DRL größer oder gleich 25 % der radialen Höhe H des Reifens (1) ist.

11. Reifen (1) nach einem der vorhergehenden Ansprüche, wobei der Umschlag (53) der Karkassenverstärkung (90) radial außen gegen den Hauptteil (52) der Karkassenverstärkung (90) über seine gesamte Höhe gepresst ist, wobei der Umschlag (53) in Kontakt mit dem Hauptteil (52) der Karkassenverstärkung (90) ist.

12. Reifen (1) nach einem der vorhergehenden Ansprüche, wobei der Reifen eine Festigkeitsverstärkung der Wulst (50) axial außerhalb des Umschlags (53) der Karkassenverstärkung (90) und axial innerhalb der Flanke (30) beinhaltet.

13. Reifen (1) nach einem der Ansprüche 4 bis 12, wobei das Elastomergemisch, aus dem mindestens eine Lage unter der Wulstlage (70) und/oder der seitlichen Festigkeitslage (60) und/oder der Flankenteillage (FE2) besteht, eine Zusammensetzung auf Basis eines Dienelastomers, eines Vernetzungssystems, eines verstärkenden Füllstoffs, Typ Ruß N550, mit einem Gesamtanteil zwischen 50 und 75 phr hat.

14. Reifen (1) nach Anspruch 13, wobei das Elastomergemisch, aus dem die Wulstlage (70) besteht, das Elastomergemisch, aus dem die seitliche Festigkeitslage (60) besteht, und das Elastomergemisch, aus dem die Flankenteillage (FE2) besteht, dieselbe Zusammensetzung haben.

## Claims

1. Tyre (1) for a passenger vehicle, comprising in a meridian plane:
two beads (50) intended to be mounted on a rim, two sidewall layers (30) connected to the beads (50), a crown (20) comprising a tread (10), the crown (20) having a first side connected to the radially outer end of one of the two sidewall layers (30) and having a second side connected to the radially outer end of the other of the two sidewall layers (30);
at least one carcass reinforcement (90) extending from the two beads (50) to the crown (20), the carcass reinforcement (90) comprising a plurality of carcass reinforcement elements and being anchored in the two beads (50) by a turn-up around an annular reinforcement structure (51), so as to form in each bead a main part (52) and a turn-up (53);
each sidewall layer (30) consisting of two axially superposed sub-layers (FE1, FE2), a first sidewall sub-layer (FE1) delimited by a first axially outermost side constituting a lateral wall of the tyre in contact with the ambient air, and a second axially inner side defined such that said sidewall sub-layer (FE1) has an average axial thickness E1, and occupying a volume V1;
each sidewall layer also comprising a second sidewall sub-layer (FE2), a first side of which coincides with the second side of the first sidewall sub-layer (FE1), and a second, axially inner side of which is at least partially in contact with the carcass reinforcement (50), said sidewall sub-layer (FE2) having an average axial thickness E2, and occupying a volume V2; the ratio V1/(V1+V2) is less than or equal to 0.3
**characterized in that** the thickness E1 of the first sidewall sub-layer (FE1) is greater than or equal to 0.7 mm, , **in that** the elongation at break of the elastomer compound constituting the first sidewall sub-layer (FE1) is greater than or equal to 200% measured at a temperature of 100°C, **and in that** the dynamic loss of the second sidewall sub-layer (FE2), Tan(δ) max, is less than or equal to 0.10, the dynamic loss is measured on a Metravib VA4000 viscosity analyser in accordance with ASTM D 5992-96, the response of a sample of vulcanized elastomer compound in the form of a cylindrical test specimen 2 mm thick and 78 mm² in cross section, subjected to sinusoidal loading in simple alternating shear stress at a frequency of 10 Hz, at a temperature of 100°C is recorded, a sweep is carried out in deformation amplitude from 0.1% to 50% outward cycle, then from 50% to 0.1% return cycle.

2. Tyre (1) according to Claim 1, **wherein** the elastic shear modulus of the second sidewall sub-layer FE2 is in the range [1.5; 10] MPa and preferably is in the range [2.5; 10] MPa.

3. Tyre (1) according to either of the preceding claims, each bead (50) comprising a filling layer (70) comprised at least in part between the main part of the carcass reinforcement (52), the turn-up (53) of the carcass reinforcement and the radially outer portion of the annular reinforcement structure, **wherein** the elastomer compound constituting the filling layer has a dynamic loss Tan(δ)max of less than or equal to 0.1, the dynamic loss is measured on a Metravib VA4000 viscosity analyser in accordance with ASTM D 5992-96, the response of a sample of vulcanized elastomer compound in the form of a cylindrical test specimen 2 mm thick and 78 mm² in cross section, subjected to sinusoidal loading in simple alternating shear stress at a frequency of 10 Hz, at a temperature of 100°C is recorded, a sweep is carried out in deformation amplitude from 0.1% to 50% outward cycle, then from 50% to 0.1% return cycle.

4. Tyre (1) according to one of the preceding claims, **wherein** the bead comprises a lateral reinforcement layer (60) consisting of an elastomer compound occupying a volume comprised at least in part between the second sidewall layer (30) and the turn-up (53) of the carcass reinforcement.

5. Tyre (1) according to Claim 4, **wherein** the lateral reinforcement layer (60) of the bead consists of an elastomer compound whose dynamic loss Tan(δ)max is less than or equal to 0.10, the dynamic loss is measured on a Metravib VA4000 viscosity analyser in accordance with ASTM D 5992-96, the response of a sample of vulcanized elastomer compound in the form of a cylindrical test specimen 2 mm thick and 78 mm² in cross section, subjected to sinusoidal loading in simple alternating shear stress at a frequency of 10 Hz, at a temperature of 100°C is recorded, a sweep is carried out in deformation amplitude from 0.1% to 50% outward cycle, then from 50% to 0.1% return cycle.

6. Tyre (1) according to one of the preceding claims, in each bead (50) a rim contact curve comprising the points of the tyre (1) in contact with the rim (100); said rim contact curve connecting a first point M1 of the tyre positioned outermost axially, and in contact with the rim, and a second point M2 of the tyre also in contact with the rim and situated in the middle of the rectilinear portion (130) connecting the flange (120) to the seat (110) of the rim; said tyre (1) also comprising two sections in a vertical meridian section of the inflated tyre, mounted on a rim, and compressed against the ground by a vertical load (250), where the load, the inflation pressure, are determined in a specification standard such as ETRTO (European Tyre and Rim Technical Organisation); a first section being located in the contact area, and a second section being located on the opposite side to the previous section in relation to the axis of rotation of the tyre;
in the first section located in the contact area, in at least a first bead, the length of the rim contact curve, LADC, being measured;
in the second section located opposite the contact area in relation to the axis of rotation of the tyre, in at least a second bead, the length of the rim contact curve, LCJ, being measured, **wherein** the ratio of the difference in the lengths of the rim contact curves of the two sections, i.e. 100*(LADC-LCJ)/LCJ, is greater than or equal to 30%.

7. Tyre (1) according to the preceding claim, **wherein** the ratio of the difference in the lengths of the rim contact curves of the two sections, i.e. 100*(LADC-LCJ)/LCJ, is greater than or equal to 40%, preferably greater than or equal to 50%, more preferably greater than or equal to 60%.

8. Tyre (1) according to one of the preceding claims, the distance DRB being the radial distance from a radially outer end of the filling layer (70), **wherein** said distance DRB is less than or equal to 50% of the radial height H of the tyre (1).

9. Tyre (1) according to one of Claims 4 to 8, the distance DRI being the radial distance from a radially inner end of the lateral reinforcement layer (60) to the straight line (HH'), **wherein** said radial distance DRI is in the range [5%; 20%] of the radial height H of the tyre (1).

10. Tyre (1) according to one of Claims 4 to 9, the distance DRL being the radial distance from the radially outer end of the lateral reinforcement layer (60) to the straight line (HH'), **wherein** said radial distance DRL is greater than or equal to 25% of the radial height H of the tyre (1).

11. Tyre (1) according to one of the preceding claims, **wherein** the turn-up (53) of the carcass reinforcement (90) is pressed against the main part (52) of the carcass reinforcement (90) over its entire height radially externally, the turn-up (53) of the carcass reinforcement (90) is pressed against the main part (52) of the carcass reinforcement (90).

12. Tyre (1) according to one of the preceding claims, **wherein** said tyre comprises a reinforcement of the bead (50) axially externally to the turn-up (53) of the carcass reinforcement (90), and axially internally to the sidewall (30).

13. Tyre (1) according to one of Claims 4 to 12, **wherein** the elastomer compound constituting at least one layer among the filling layer (70), and/or the lateral reinforcement layer (60) and/or the sidewall sub-layer (FE2) has a composition based on a diene elastomer, a crosslinking system, a reinforcing filler, carbon black type N550, at an overall rate of between 50 and 75 phr.

14. Tyre (1) according to Claim 13, **wherein** the elastomer compound constituting the filling layer (70), the elastomer compound constituting the lateral reinforcement layer (60), and the elastomer compound constituting the sidewall sub-layer (FE2) have the same composition.
